# EUROPEAN PATENT APPLICATION

(11) **EP 0 523 897 A1**
(43) Date of publication of application: **20.01.1993**
(21) Application number: 92306234.3
(22) Date of filing: 07.07.1992
(51) Int. Cl.: G01S 5/14

(54) **Navigation device using global positioning system**

(30) Priority: 17.07.1991 JP 176890/91
(71) Applicant: PIONEER ELECTRONIC CORPORATION, Meguro-ku Tokyo-to (JP)
(72) Inventor: Yamauchi, Keiicho, c/o Pioneer Electronic Corp., Oaza-Yamada, Kawagoe-shi, Saitama-ken (JP)
(74) Representative: Brunner, Michael John

(57) **Abstract**

A navigation device includes a position measurement unit (11₋₁) for receiving an electric wave for use in position measurement from a satellite (5) and for measuring a current position of a movable body (4₋₁) in which the navigation device is installed. A display unit (8₋₁) displays information concerning the current position of the movable body (4₋₁). A transmitting unit (7₋₁) transmits information concerning the current position of the movable body (4₋₁) to a transmission medium (3₋₁). A receiving unit (7₋₁) receives, via the transmission medium (3₋₁), information concerning the current positions of other movable bodies (4₋ₙ) transmitted thereby. A control unit (6₋₁) controls the display unit (8₋₁) so that the information concerning the current positions of the other movable bodies (4₋ₙ) are displayed together with the information concerning the current position of the movable body (4₋₁).

## Description

### BACKGROUND OF THE INVENTION

### Field of the Invention

The present invention generally relates to a navigation device, and more particularly to a navigation device using a GPS (Global Positioning System) satellite. Description of the Prior Art

A stand-alone navigation device is a position measuring device for use in movable bodies, such as automobiles, airplanes and ships. Such a stand-alone navigation device obtains a two-dimensional displacement (vector quantity) of a movable body by using direction data from a direction sensor and speed data from a speed sensor, and adds the two-dimensional displacement to a reference point. In this manner, the current position of the movable body can be identified. For example, the navigation device installed in an automobile operates as follows. When an automobile runs, a predetermined number of pulses are generated while one turn of a drive shaft is completed. The distance between a reference point and the current position is calculated by obtaining the total number of pulses generated during the time the automobile moves. The distance is multiplied by a distance correction coefficient in order to obtain a traveling distance.

On the other hand, a GPS type navigation device is a position measuring device using a satellite. The GPS type navigation device receives electric waves emitted from three or more than GPS satellites, and determines the position of a receiving point (current point of the movable body) from pseudo-distance data including a time offset of a receiver based on the distance between each GPS satellite and the receiving point, and position data of GPS satellite. The position of the receiving point is represented on a display.

However, the navigation device displays position information indicating the position of only the movable body in which the navigation system is installed. Namely, if the movable body is an automobile, and only the position information concerning the automobile in which the navigation system is installed (hereinafter referred to as "self position information") is displayed. However, if position information concerning other automobiles is also represented in addition to the self position information, it will be convenient to a driver or a passenger, especially in a case where a plurality of automobiles, such as trucks for delivery or taxis move as a group. In the following description, the position information concerning other automobiles is referred to as "group member position information".

### SUMMARY OF THE INVENTION

It is an object of the present invention to provide a navigation device capable of displaying not only the self position information showing the position of the automobile itself but also the group member position information showing the positions of other automobiles.

According to one aspect of the present invention, there is provided a navigation device including: position measurement unit for receiving an electric wave for use in position measurement from a satellite and for measuring a current position of a movable body in which the navigation device is installed; display unit for displaying information concerning the current position of the movable body; transmitting unit for transmitting information concerning the current position of the movable body to a transmission medium; receiving unit for receiving, via the transmission medium, information concerning current positions of at least one other movable bodies transmitted from each of the other movable bodies; and control unit, coupled to the position measurement unit, the display unit and the receiving unit, for controlling the display unit so that the information concerning the current positions of the other movable bodies is displayed together with the information concerning the current position of the movable body.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a diagram showing the entire structure of the navigation system according to the present invention;
FIG. 2 is a block diagram of navigation devices according to the present invention shown in FIG. 1;
FIG. 3 is a block diagram of a GPS receiving unit shown in FIG. 2;
FIGS. 4 and 5 are diagrams showing the operation of the navigation system of the present invention.

### DESCRIPTION OF THE PREFERRED EMBODIMENT

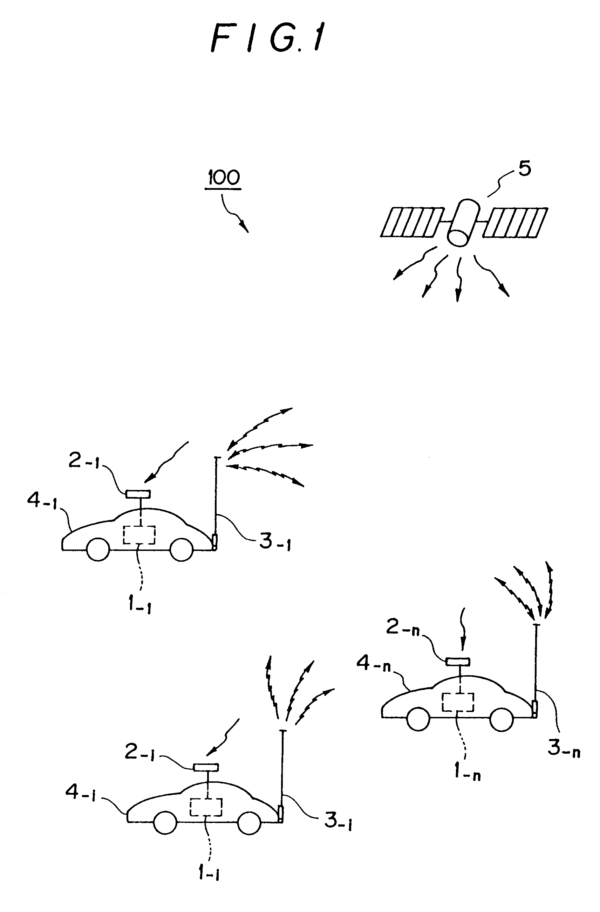

A description will now be given, with reference to FIGS. 1 through 3, of an embodiment of the present invention.

FIG. 1 shows the entire structure of a navigation system according to an embodiment of the present invention. A navigation system 100 shown in FIG. 1 includes a GPS satellite 5, and n units of navigation devices 1₋₁ - 1₋ₙ respectively installed in automobiles 4₋₁ - 4₋ₙ. The navigation devices 1₋₁ - 1₋ₙ have antennas 2₋₁ - 2₋ₙ for satellite communications, and antennas 3₋₁ - 3₋ₙ for ground communications, respectively. For example, the navigation device 1₋ᵢ receives data sent from the GPS satellite 5, and generates position information (self position information) showing the current position of the automobile 4₋ᵢ using the data received. The self position information is represented on a display to be seen by the driver's or passenger's. The self position information is transmitted to the other automobiles via the antenna 3₋ᵢ for ground communications. The navigation device (for example, navigation device 1₋ₙ) of each or some of the other automobiles receives, as information showing the current position of the other automobile (group member position information), the self position information concerning the automobile 4₋ᵢ. The navigation device 1₋ₙ of the automobile 4₋ₙ simultaneously displays the position information concerning the automobile 4ᵢ and the position information concerning the automobile 4₋ₙ itself in such a manner that the positions of the automobiles 4₋ᵢ and 4₋ₙ can be discriminated from each other on the display. The position information concerning the automobile 4₋ₙ is sent to the navigation device 1₋ᵢ of the automobile 4ᵢ. The navigation device 1₋ᵢ simultaneously displays the position information showing the current position of the automobile 4₋ᵢ, itself and the position information showing the current position of the other automobile 4_{- n}. In the above manner, the position information concerning all of the automobiles 4₋₁ - 4₋ₙ are transferred between them via the GPS satellite 5 and ground communications. Each of the navigation devices 1₋₁ - 1₋ₙ simultaneously displays the information showing the current position of the automobile itself and the information showing the current position of each or some of the other automobiles 1₋₁ - 1₋ₙ.

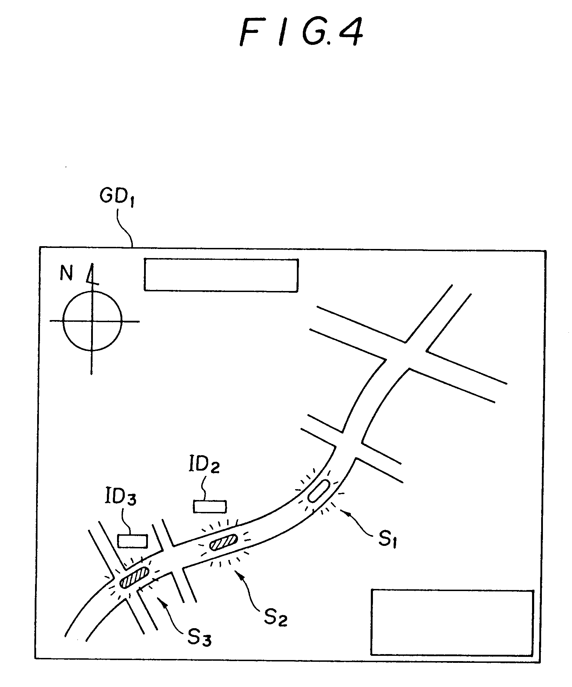

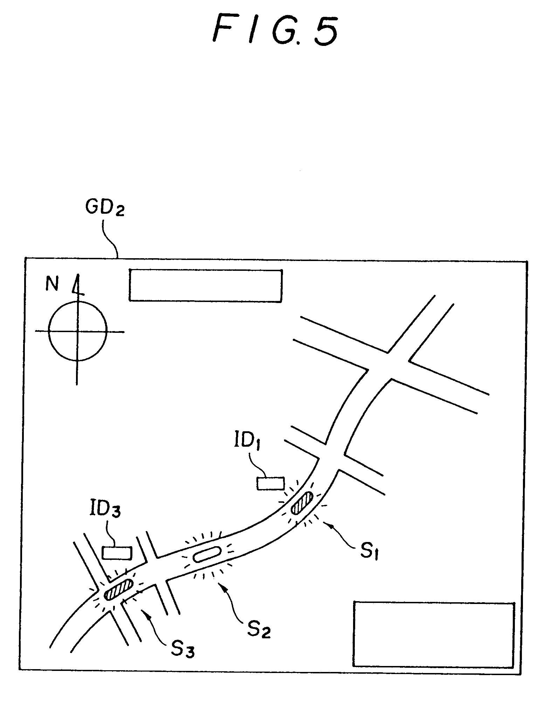

FIGS. 4 and 5 show examples of displays on the navigation devices. In the examples shown in FIGS. 4 and 5, there are three automobiles. FIG. 4 shows a display GD1 of the first automobile. In FIG. 4, S1 indicates a position mark which corresponds to the self position information showing the current position of the first automobile. S2 and S3 indicate position marks, corresponding to the group member position information, which show the current positions of the second and third automobiles. Identification codes ID2 and ID3 used for identifying the second and third automobiles are displayed close to the position marks S2 and S3, respectively. If the identification codes are not displayed, the second and third automobiles cannot be distinguished from each other. In order to easily distinguish the position mark S1 from the position marks S2 and S3 on the display GD1, the position mark S1 is different in shape or luminance from the position marks S2 and S3. When a color display is used, it is possible to display the position marks S1, S2 and S3 so that the position mark S1 has a color different from color of the position marks S2 and S3. The driver or passenger of the first automobile monitors the mark S1 and marks S2 and S3 indicating other automobiles, and easily knows the positional relation among the three automobiles. FIG. 5 shows a display GD2 of the second automobile. In the second automobile, the position mark S2 indicates the current position of the second automobile, and the position marks S1 and S3 indicate the current positions of the first and third automobiles, respectively.

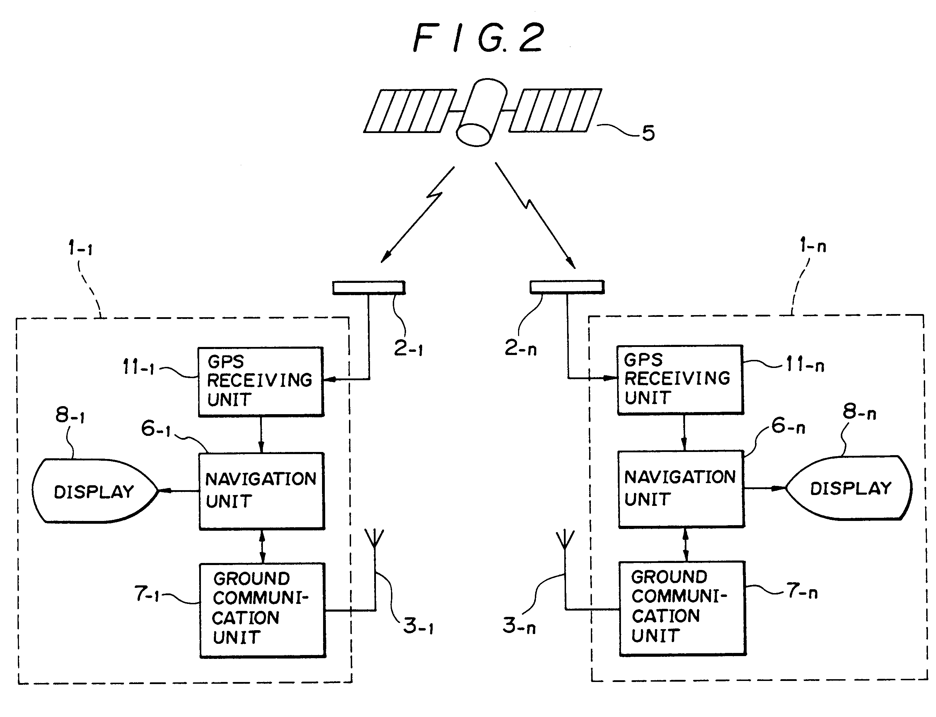

FIG. 2 shows the navigation devices 1₋₁ and 1₋ₙ among the navigation devices 1₋₁ through 1₋ₙ. The navigation device 1₋₁ comprises the aforementioned antenna 2₋₁ for satellite communications, a navigation unit 6₋₁, a GPS receiving unit 11₋₁, a display unit 8₋ ₁, a ground communication unit 7₋₁, and the aforementioned antenna 3₋₁ for ground communications. The navigation device 1₋ₙ is constructed in the same manner as the navigation device 1₋₁.

The operation of the navigation device will now be described with reference to FIG. 2. The GPS satellite 5 transmits position measurement data to the navigation devices 1₋₁ and 1₋ₙ. The antennas 2₋₁ and 2₋ₙ of the navigation devices 1₋₁ and 1₋ₙ receive the position measurement data transmitted by the GPS satellite 5, and transfer it to the GPS receiving units 11₋₁ and 11₋ₙ, respectively. The GPS receiving units 11₋₁ and 11₋ₙ generate the respective self position information from the received position measurement data, and transfer the self position information to the navigation units 6₋₁ and 6₋ₙ, respectively. The navigation units 6₋₁ and 6₋ₙ output the respective self position information to the display units 6₋₁ and 6₋ₙ, respectively. Further, the navigation units 6₋₁ and 6₋ₙ output the respective self position information to the ground communication units 7₋₁ and 7₋ₙ, respectively. The ground communication units 7₋₁ and 7₋ₙ include radio communication modems (not shown), which emit the respective self position information via the antennas 3₋₁ and 3₋ₙ, respectively. The ground communication unit 7₋₁ receives the self position information concerning the navigation device 1₋ₙ via the antenna 3₋₁ for ground communications, and sends it to the navigation unit 6₋₁ as the group member position information. The navigation unit 6₋₁ controls the display unit 8₋₁ so that the self position information indicating the current position of the automobile 4₋₁ and the group member position information indicating the current position of the automobile 4₋ₙ are displayed on the display unit 8₋₁ in the aforementioned manner. That is, the display unit 8₋₁ of the automobile 4₋₁ displays the current position thereof by the position mark S1 and the current position of the automobile 4₋ₙ by the position mark Sn together with its identification number IDn. Similarly, the display unit 8₋ₙ of the automobile 4₋ₙ displays the current position thereof by the position mark Sn and the current position of the automobile 4₋₁ by the position mark S1 together with its identification number ID1.

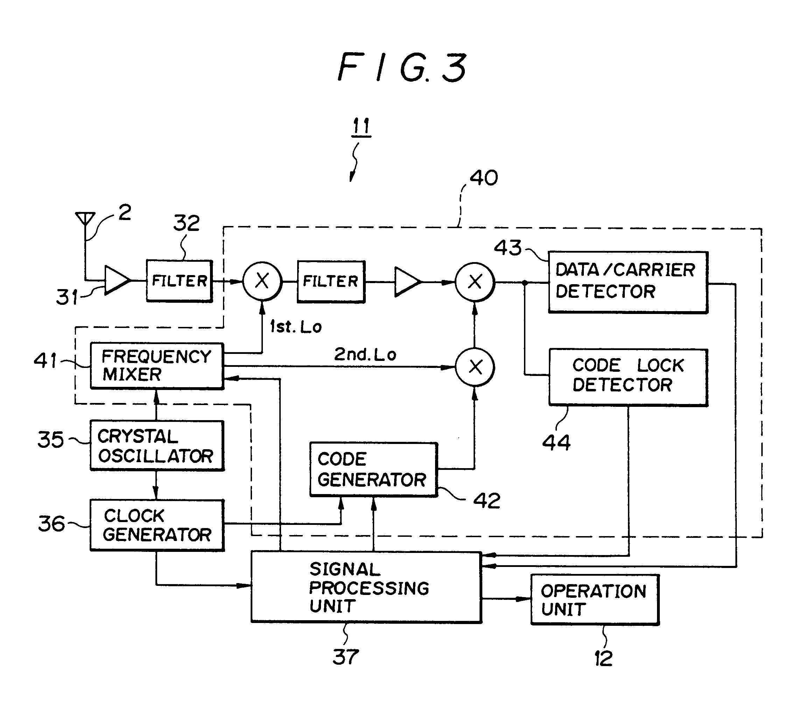

The GPS receiving unit 11 is constructed as shown in FIG. 3. An GPS antenna 2 is coupled to a GPS receiver 40 via a preamplifier 31 and a band-pass filter 32. A crystal oscillator 35 generates a reference frequency signal, which is a reference timing control signal of the GPS receiving unit 11. A clock generator 36 generates, on the basis of the reference frequency signal, a clock signal for controlling operation timing of a signal processing unit 37. An operation unit 12 is connected to the signal processing unit 37.

The GPS receiver 40 includes the following components. A frequency mixing circuit 41 generates a signal having the same pattern as data relating to a carrier of the GPS satellite, the position thereof, and a clock built in the GPS satellite. A code generator 42 receives the clock signal generated by the clock generator 36, and generates a code signal having the same pattern as a distance measurement signal. A data/carrier detector 43 synchronously detects, by using the output signals of the frequency mixing circuit 41 and the code generator 42, data relating to the clock built in the GPS satellite and an orbit of the GPS satellite, and the carrier. A code lock detector 44 synchronously detects the above-mentioned distance measurement signal by using the code signal generated by the code generator 42.

The operation unit 12 includes a self- sustaining type position measurement unit (not shown). A direction sensor of the stand-alone type position measurement unit is, for example, a geomagnetic sensor or a gyrocompass, which detects a direction in which the receiving point (movable body) moves. A speed sensor used for detecting the movement speed of the receiving point is, for example, a revolution speed sensor. The movement distance of the receiving point is calculated by a pulse signal output by the speed sensor and a distance correction coefficient. The movement distance is calculated in accordance with changes in the movement direction of the receiving point detected by the direction sensor. Hence, a route of the movement of the movable body from the reference point is calculated, and the current position can be identified.

The present invention is not limited to the specifically described embodiment. For example, the movable body may be a bicycle or a human being.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A navigation device comprising:
position measurement means (11₋₁) for receiving an electric wave for use in position measurement from a satellite (5) and for measuring a current position of a movable body (4₋₁) in which the navigation device is installed;
display means (8₋₁) for displaying information concerning the current position of said movable body (4₋₁);
transmitting means (7₋₁) for transmitting information concerning the current position of said movable body (4₋₁) to a transmission medium (3₋₁);
receiving means (7₋₁) for receiving, via the transmission medium (3₋₁), information concerning current positions of at least one other movable bodies (4₋ₙ) transmitted from each of said other movable bodies (4₋ₙ); and
control means (6₋₁), coupled to said position measurement means (11₋₁), said display means (8₋₁) and said receiving means (7₋₁), for controlling said display means (8₋₁) so that the information concerning the current positions of said other movable bodies (4₋ₙ) are displayed together with the information concerning the current position of said movable body (4₋₁).

2. A navigation device as claimed in claim 1, wherein said control means (6₋₁) comprises means for controlling said display means (8₋₁) so that identification codes (IDₙ) identifying said other movable bodies (4₋ₙ) are displayed together with the information concerning the current positions of said other movable bodies (4₋ₙ).

3. A navigation device as claimed in claim 1, wherein said control means (6₋₁) comprises means for controlling said display means (8₋₁) so that the information concerning the current position of said movable body (4₋₁) includes a mark having a shape different from other marks related to the information concerning the current positions of said other movable bodies (4₋ₙ).

4. A navigation device as claimed in claim 1, wherein said control means (6₋₁) comprises means for controlling said display means (8₋₁) so that the information concerning the current position of said movable body (4₋₁) includes a mark having a color different from that of other marks related to the information concerning the current positions of said other movable bodies (4₋ₙ).

5. A navigation device as claimed in claim 1, wherein said control means (6₋₁) comprises means for controlling said display means (8₋₁) so that the information concerning the current position of said movable body (4₋₁) includes a mark having a brightness different from that of other marks related to the information concerning the current positions of said other movable bodies (4₋ₙ).

6. A navigation device as claimed in claim 1, wherein said transmitting means (7₋₁) comprises radio transmission means (3₋₁) for sending the information concerning the current position of said movable body (4₋₁) to the external device by means of an electric wave for ground communications.

7. A navigation device as claimed in claim 1, wherein said receiving means (7₋₁) comprises means for receiving an electric wave for ground communications, said electric wave containing the information concerning the current positions of said other movable bodies (4₋ₙ).

8. A navigation device as claimed in claim 1, wherein said satellite (5) is a GPS (Global Positioning System) satellite.

9. A navigation device as claimed in claim 1, wherein the information concerning the current positions of said other movable bodies (4₋ₙ) includes an identification code (IDₙ) identifying said other movable bodies (4₋ₙ).
